(19) Europäisches Patentamt
European Patent Office
Office européen des brevets

(11) **EP 2 579 367 A1**

(12) **EUROPEAN PATENT APPLICATION**
published in accordance with Art. 153(4) EPC

(43) Date of publication:
**10.04.2013 Bulletin 2013/15**

(51) Int Cl.:
*H01M 4/48* (2010.01)   *C01B 33/02* (2006.01)
*C01B 33/113* (2006.01)   *H01M 4/36* (2006.01)

(21) Application number: **11786273.0**

(22) Date of filing: **27.04.2011**

(86) International application number:
**PCT/JP2011/002466**

(87) International publication number:
**WO 2011/148569 (01.12.2011 Gazette 2011/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2010   JP 2010213889**
**25.05.2010   JP 2010119159**

(71) Applicant: **OSAKA Titanium Technologies Co., Ltd.**
**Amagasaki-shi, Hyogo 660-8533 (JP)**

(72) Inventors:
• **KANNO, Hideaki**
**Amagasaki-shi**
**Hyogo 660-8533 (JP)**
• **SHIMOSAKI, Shinji**
**Amagasaki-shi**
**Hyogo 660-8533 (JP)**
• **TAKEMURA, Kazuo**
**Amagasaki-shi**
**Hyogo 660-8533 (JP)**

(74) Representative: **Simons, Amanda Louise**
**J A Kemp**
**14 South Square**
**Gray's Inn**
**London WC1R 5JJ (GB)**

(54) **POWDER FOR NEGATIVE ELECTRODE MATERIAL OF LITHIUM-ION RECHARGEABLE BATTERY ELECTRODE, AND METHOD OF PRODUCING SAME**

(57)     Provided is a negative-electrode material powder for lithium-ion secondary battery including a silicon-rich layer on the surface of a lower silicon oxide powder, and a negative-electrode material powder for said battery comprising a silicon oxide powder, characterized by satisfying $c/d<1$, where c is the molar ratio of oxygen to silicon on the surface of the silicon oxide powder and d is that for the entire part thereof. It preferably satisfies one of $c<1$ and $0.8<d<1.0$. Preferably, the surface of the powder is devoid of crystalline silicon, the inside of the powder is amorphous, and the surface includes a conductive carbon film. The surface of said negative-electrode material powder is coated with silicon using disproportionation of $SiCl_x$ (X<4). This provides a negative-electrode material powder that can be used as a lithium-ion secondary battery having a large reversible capacity, while a small irreversible capacity, and a method for producing the same.

FIG. 3

EP 2 579 367 A1

**Description**

TECHNICAL FIELD

The present invention relates to a negative-electrode material powder for lithium-ion secondary battery that can be used as a negative electrode active material for lithium-ion secondary battery having a large reversible capacity and a small irreversible capacity, and a method for producing the same.

BACKGROUND ART

In relation to significant development of mobile electronic devices and communication equipments these days, it is strongly desired to develop high energy density secondary battery, from the viewpoint of economic efficiency, device downsizing and weight reduction. High energy density secondary batteries currently available include nickel cadmium batteries, nickel metal hydride batteries, lithium-ion secondary batteries and polymer batteries. Among them, there is a growing demand for lithium-ion secondary batteries in the power source market due to exceptionally long life and high capacity compared with nickel cadmium batteries and nickel metal hydride batteries.

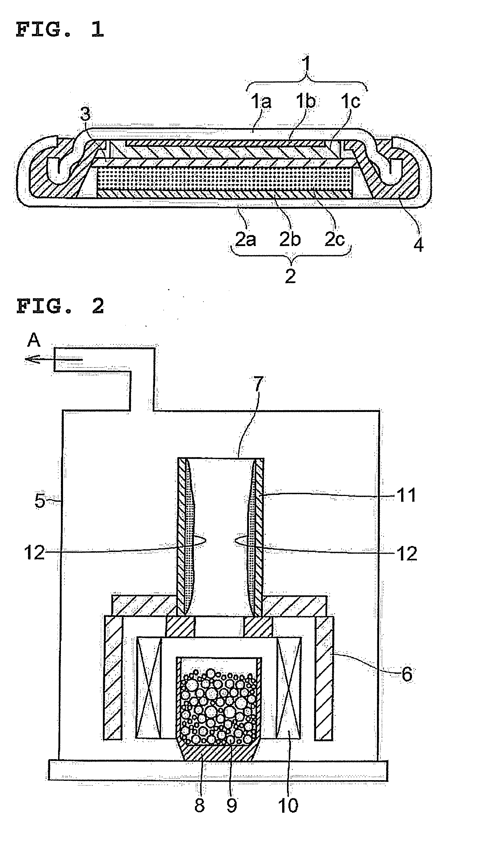

Fig. 1 shows a configuration example of a coin-shaped lithium-ion secondary battery. As shown in Fig. 1, the lithium-ion secondary battery comprises a positive electrode 1, a negative electrode 2, a separator 3 impregnated with electrolyte, and a gasket 4 to ensure electric insulation between the positive electrode 1 and the negative electrode 2 and to seal substances contained in a battery. When charging and discharging take place, lithium-ions move back and forth between the positive electrode 1 and the negative electrode 2 via the electrolyte in the separator 3.

The positive electrode 1 comprises a counter electrode case 1a, a counter electrode current collector 1b and a counter electrode 1c. In the counter electrode 1c, lithium cobaltate ($LiCoO_2$) or manganese spinel ($LiMn_2O_4$) is mainly used. The negative electrode 2 comprises a working electrode case 2a, a working electrode current collector 2b, and a working electrode 2c. The negative-electrode material used for the working electrode 2c generally comprises an active material (negative electrode active material) that can occlude and release lithium-ions, a conductive auxiliary agent, and a binder.

Negative electrode active materials for lithium-ion secondary batteries conventionally proposed include composite oxide of lithium and boron, composite oxide of lithium and a transition metal (V, Fe, Cr, Mo, Ni, etc.), compounds comprising Si, Ge or Sn and nitrogen (N) and oxygen (O), and Si particles coated with a carbon layer on the surface by chemical vapor deposition.

Although all of these negative electrode active materials may enhance charge and discharge capacities and increase energy density, significant deterioration is seen due to generation of dendrite or a passivated compound on electrodes, or expansion and contraction at the time of occlusion and release of lithium-ions become larger, as charging and discharging are repeated. For the reasons, lithium-ion secondary batteries using these negative electrode active materials are poor in maintaining the discharge capacity with repetition of charging and discharging (hereinafter referred to as "cycle characteristics").

In addressing this, a silicon oxide, which is expressed by $SiO_x$ ($0<x\leq2$), such as SiO has conventionally been studied as a negative electrode active material. The silicon oxide is a general term of oxidized silicon obtained by heating a mixture of silicon dioxide and silicon, cooling silicon monoxide gas generated, and forming deposition thereof, which is already commercialized as a vapor deposition material. The material is expected these days as a negative electrode active material for lithium-ion secondary batteries.

Since the silicon oxide has a lower (less noble) electrode potential with respect to lithium, without deterioration such as breakup of crystal structure or generation of irreversible substances due to occlusion and release of lithium-ions during charging and discharging, with capability of reversibly occluding and releasing lithium-ions, it could be a negative electrode active material with a large effective charge and discharge capacities. The use of silicon oxides as a negative electrode active material has provided lithium-ion secondary batteries having a higher capacity compared with cases where carbon is used and a better cycle characteristics compared with cases where high-capacity negative-electrode materials are used such as Si and Sn alloys.

As an attempt with regard to the above-mentioned negative electrode active materials, Patent Literature 1, for example, proposed a nonaqueous electrolyte secondary battery using silicon oxides capable of occluding and releasing lithium-ions as a negative electrode active material. The proposed silicon oxides contain lithium in the crystal or the amorphous structure thereof and comprises a composite oxide of lithium and silicon so that lithium-ions can be occluded and released by an electrochemical reaction in the nonaqueous electrolyte.

CITATION LIST

PATENT LITERATURE

PATENT LITERATURE 1: Japanese Patent No. 2997741

SUMMARY OF INVENTION

TECHNICAL PROBLEM

As mentioned above, the secondary battery proposed in Patent Literature 1 may provide a high-capacity negative electrode active material. A study by the inventors of the present invention, however, has revealed a problem that the material is reconciled to a large irreversible capacity in addition to an insufficient reversible capacity.

The present invention has been made to address these problems and to provide a negative-electrode material powder for lithium-ion secondary battery that can be used as a negative electrode active material for lithium-ion secondary battery having a large reversible capacity and a small irreversible capacity and a method for producing the same.

SOLUTION TO PROBLEM

To solve the above problems, the inventors of the present invention have studied treatment methods of silicon oxides. As a result, the inventors have reached a concept that silicon oxides are to be powderized to be coated on the surface thereof with silicon. A further study has found that the capacity can be enhanced and the irreversible capacity can be reduced at the initial charge, while maintaining the cycle characteristics of lithium-ion secondary batteries, by using the silicon oxide powder that satisfies c/d<1 as a negative electrode active material, wherein c is the value of the molar ratio of oxygen to silicon (O/Si) on the surface and d is the value of the molar ratio of oxygen to silicon for the entire part of the powder.

Also found has been that, by using the silicon oxide powder coated with silicon or by forming a conductive carbon film on the surface of the silicon oxide powder that satisfies c/d<1, the reversible capacity could be increased, while the irreversible capacity could be reduced on a lithium-ion secondary battery using these as a negative electrode active material.

The present invention has been made based on the above findings and are summarized by a negative-electrode material powder for lithium-ion secondary battery of the following (1) and (2) and by the method for producing a negative-electrode material powder for lithium-ion secondary battery of the following (3).

(1) A negative-electrode material powder for lithium-ion secondary battery in which a lower silicon oxide powder is used, characterized in that a silicon-rich layer is included on the surface of the lower silicon oxide powder.

The negative-electrode material powder for lithium-ion secondary battery of the above (1) preferably includes a conductive carbon film on the surface of the silicon-rich layer.

(2) A negative-electrode material powder for lithium-ion secondary battery, which satisfies c/d<1, given that c is the value of the molar ratio of oxygen to silicon on the surface of powder and d is the value of the molar ratio of oxygen to silicon for the entire part.

The negative-electrode material powder for lithium-ion secondary battery of the above (2) preferably satisfies at least one of relationships represented by c<1 and 0.8<d<1.0, more preferably satisfies the relationship of 0.8<d<0.9. It is preferable that the surface of the powder is devoid of crystalline silicon or that the inside of the powder is amorphous, and further that the surface includes a conductive carbon film.

(3) A method for producing a negative-electrode material powder for lithium-ion secondary battery in which a silicon-rich layer is included on the surface of the lower silicon oxide powder, characterized in that the silicon-rich layer on the surface of the lower silicon oxide powder is formed using disproportionation reaction of $SiCl_x$ (X<4).

In the method for producing a negative-electrode material powder for lithium-ion secondary battery of the above (3), it is preferable that the disproportionation reaction of $SiCl_x$ is performed in an atmosphere at 500 to 1100°C, further preferably in an atmosphere at 500 to 900°C.

In the present invention, "lower silicon oxide powder" refers to powder of silicon oxides ($SiO_x$) for which the value x of molar ratio of oxygen to silicon for the entire part satisfies $0.4 \leq x \leq 1.2$. The measurement method of the molar ratio of oxygen to silicon on the surface or for the entire part of the silicon oxide powder is described later.

"Silicon-rich layer" refers to a domain of the surface and its vicinity of the negative-electrode material powder for lithium-ion secondary battery, the domain being where the value x of the above molar ratio of oxygen to silicon on the surface (in terms of $SiO_x$) is lower than the x value for the entire part, including a silicon film.

As for the lower silicon oxide powder or the negative-electrode material powder for lithium-ion secondary battery, "including a conductive carbon film on the surface" means, as mentioned later, that the value Si/C of the molar ratio of silicon to carbon as a result of a surface analysis conducted with X-ray photoelectron spectrometer is 0.02 or less. In other words, it means that a state in which most of the surface of the lower silicon oxide powder or the negative-electrode material powder for lithium-ion secondary battery is covered with C and almost no Si is exposed.

ADVANTAGEOUS EFFECTS OF INVENTION

A lithium-ion secondary battery having a large reversible capacity, while having a small irreversible capacity, can be obtained by using the negative-electrode material powder for lithium-ion secondary battery of the present invention as a negative electrode active material.
According to the method for producing a negative-electrode material powder for lithium-ion secondary battery of the present invention, a negative-electrode material powder for lithium-ion secondary battery can be obtained such that using the powder as a negative-electrode active material makes it possible to provide a lithium-ion secondary battery having a large reversible capacity, while having a small irreversible capacity.

BRIEF DESCRIPTION OF DRAWINGS

[Fig. 1] Fig. 1 is a view showing a configuration example of a coin-shaped lithium-ion secondary battery.
[Fig. 2] Fig. 2 is a view showing a configuration example of production unit for silicon oxide.
[Fig. 3] Fig. 3 is a view showing a configuration example of a device of disproportionation reaction of $SiCl_x$.

DESCRIPTION OF EMBODIMENTS

1. Negative-Electrode Material Powder for Lithium-ion Secondary Battery of Invention

A negative-electrode material powder for lithium-ion secondary battery of the present invention includes a silicon-rich layer on the surface of a lower silicon oxide powder, in which a relationship of c/d<1 is satisfied, wherein c is the value of the molar ratio of oxygen to silicon on the surface thereof and d is the value of the molar ratio of oxygen to silicon for the entire part thereof.
When a silicon oxide powder is used as a negative-electrode material for lithium-ion secondary battery, the reversible capacity of the lithium-ion secondary battery can be increased by mixing a silicon powder with a silicon oxide powder to increase the ratio of silicon to oxygen. In this case, however, expansion and contraction occur intensively around the silicon powder in association with an in-and-out behavior of lithium-ions toward the negative-electrode material during charging and discharging, causing separation of the silicon powder from the silicon oxide powder, resulting in an increase of the irreversible capacity.
The inventors of the present invention have studied a method that increases the ratio of silicon to oxygen without causing such separation of silicon, and have achieved to provide a lithium-ion secondary battery having a large reversible capacity, while having a small irreversible capacity with less separation of silicon in the negative-electrode material, by coating the surface of silicon oxide powder, especially lower silicon oxide powder, with silicon.
The lower silicon oxide powder refers, as mentioned above, to the powder of silicon oxide ($SiO_x$) for which the value x of molar ratio of oxygen to silicon (O/Si) for the entire in whole part satisfies $0.4 \leq x \leq 1.2$. The reason for using the lower silicon oxide powder for the negative-electrode material powder for lithium-ion secondary battery of the present invention is that when the x value of silicon oxide powder to be used as the negative-electrode material powder for lithium-ion secondary battery is lower than 0.4, deterioration due to repeatedly charging and discharging of a lithium-ion secondary battery would be excessive, and when the value is larger than 1.2, the reversible capacity of the lithium-ion secondary battery would be small. The value x preferably satisfies $0.8 \leq x \leq 1.05$.
A further detailed study has found that a lithium-ion secondary battery with similar characteristics can be obtained with the silicon oxide powder if it satisfies c/d<1, wherein c is the value of the molar ratio of oxygen to silicon on the surface and d is the value of the molar ratio of oxygen to silicon for the entire part of the powder. Also found is that the silicon coating may completely cover the entire part of the powder or may cover part of the powder.
Conclusively, it has been found that a lithium-ion secondary battery having a large reversible capacity, while having a small irreversible capacity, can be obtained, by forming silicon coating on the surface of silicon oxide powder or by making the silicon oxide powder satisfy c/d<1, i.e., by forming a silicon-rich layer on the surface of the negative-electrode material powder for lithium-ion secondary battery. "Silicon-rich layer" refers to a domain of the surface of, including a silicon film, and its vicinity of the negative-electrode material powder for lithium-ion secondary battery, where the value x of the above molar ratio of oxygen to silicon is lower than that for the entire part.

For the negative-electrode material powder for lithium-ion secondary battery of the present invention, the value c of the molar ratio of oxygen to silicon on the surface preferably satisfies c<1. This is because, the larger the ratio of silicon to oxygen on the surface of silicon oxide powder is, the larger the reversible capacity of a lithium-ion secondary battery using the silicon oxide powder as negative electrode active material.

The value d of the molar ratio of oxygen to silicon for the entire part of the negative-electrode material powder for lithium-ion secondary battery, preferably satisfies 0.8<d<1.0 and more preferably satisfies 0.8<d<0.9. This is because, the larger the ratio of silicon to oxygen for the entire part of silicon oxide powder, the larger the reversible capacity of a lithium-ion secondary battery using the silicon oxide powder as negative-electrode material, and because, the too larger proportion of silicon likely causes silicon to leave from silicon oxide, resulting in a large irreversible capacity.

For the negative-electrode material powder for lithium-ion secondary battery of the present invention, at least either of the surface or the inside thereof preferably is free of crystalline silicon, and more preferably, the entire part is free of crystalline silicon. This is because, the less the crystalline silicon in silicon oxide powder, the larger the value c/d of a lithium-ion secondary battery using the silicon oxide powder as negative electrode active material, which is mentioned later in examples. Crystalline silicon is formed when silicon oxide is heated at a temperature of about 900°C or more through disproportionation reaction ($2SiO \rightarrow Si + Si_2$). When the heating temperature is lower than about 900°C, the amorphous structure of silicon oxide is maintained. The evaluation method for crystalline silicon is mentioned later.

For the negative-electrode material powder for lithium-ion secondary battery of the present invention, the sum of elements other than silicon and oxygen is preferably 2 % by mass or less in content and more preferably 0.5 % by mass or less in content. This is because the use of a negative electrode active material with impurities of low content can improve characteristics of a lithium-ion secondary battery.

The negative-electrode material powder for lithium-ion secondary battery of the present invention, preferably includes a conductive carbon film on the surface of the surface-rich layer. This is because forming the conductive carbon film on the surface can provide a large reversible capacity, while allowing a small irreversible capacity, in a lithium-ion secondary battery compared with the case without the conductive carbon film.

2. Measurement of Molar Ratio of Oxygen to Silicon

2-1. Surface of Powder

The value of the molar ratio of oxygen to silicon on the surface of silicon oxide powder can be measured by Auger electron spectroscopy. The silicon oxide powders densely prepared on a sample table of an Auger electron spectrometer are used in the measurement, and an area of a 0.5-mm square thereof is randomly selected and divided into 10x10 equal areas, i.e. 100 equal areas, and then, measurement is first performed at every divided area so as to calculate the average, which is defined as the value of the molar ratio of oxygen to silicon on the surface of the silicon oxide powder.

For measurement, the beam diameter of the primary electron beam is $0.5\mu m$ or less and $Ar^+$ ion etching is performed together. The measurement target is a region of 20 - 100nm in depth from the surface, in terms of the converted value by the rate of $Ar^+$ ion etching (52.6nm/min).

2-2. Entire Part of Powder

The value of the molar ratio of oxygen to silicon for the entire part of silicon oxide powder can be measured by ICP emission spectroscopy or inert gas melting - infrared absorption spectrophotometry. The amount of a Si content is measured by ICP emission spectroscopy after the silicon oxide powder is liquidized with alkali fusion or by etching with mixed acid of hydrogen fluorite and nitric acid. The amount of O content is measured by inert gas melting - infrared absorption spectrophotometry. The value of the molar ratio of oxygen to silicon for the entire part of silicon oxide powder is calculated from these measured values.

3. Evaluation of Crystalline Silicon in Silicon Oxide Powder

3-1. Surface of Powder

Crystalline silicon on the surface of silicon oxide powder can be evaluated using a transmission electron microscope. Evaluation samples are produced by embedding powder particles in resin and by grinding it to expose cross-sections thereof. A lattice image is measured for a region from the surface to 100 nm or less in a depth-wise direction, wherein a single powder particle is randomly selected from powder particles on an exposed cross-section on the ground surface of the embedded sample in resin.

If silicon is crystalline, a lattice image can be obtained with a lattice constant of 0.5431nm and a space group of Fd-3m (to be exact, a symbol with the letters "F", "d" and "m" in italic, and "-3" is replaced with "3" attached with "⁻" superscript.) If any lattice image of this is observed, it is determined that the silicon is crystalline.

3-2. Inside of Powder Particle

Crystalline silicon inside a particle of the silicon oxide powder can also be evaluated using a transmission electron microscope as well. A cross-section of a powder particle is randomly selected in the above sample as an observation target and a lattice image inside the particle (the center of the particle) is measured. If the silicon is not crystalline, no lattice image can be obtained. Therefore, if no lattice image is observed, it is determined that it is not crystalline.

4. Evaluation of Formation State of Conductive Carbon Film

For the lower silicon oxide powder or the negative-electrode material powder for lithium-ion secondary battery, the term "including a conductive carbon film on the surface" means that, when surface analysis is conducted with X-ray photoelectron spectrometer (XPS) using AlKα beam (1486.6eV) with respect to the lower silicon oxide powder subjected to a forming treatment of a conductive carbon film, the value Si/C of the molar ratio of silicon to carbon is 0.02 or less. Measurement conditions of XPS are shown in Table 1. The term "Si/C is 0.02 or less" means a state in which most of the surface of lower silicon oxide powder or the negative-electrode material powder for lithium-ion secondary battery is covered with C and almost no Si is exposed.

[Table 1]

TABLE 1

| Device | Quantera SXM (by PHI) |
|---|---|
| Excited X-ray | Al Kα beam (1486.6 eV) |
| Photoelectron escape angle | 45° |
| Correction of bond energy | C 1s main peak is 284.6 eV |
| Electron orbit | C: 1s, Si: 2p |

5. Method for Producing Negative-Electrode Material Powder for Lithium-ion Secondary Battery of Invention

5-1. Method for Producing Silicon Oxide Powder

Fig. 2 shows a configuration example of production unit for silicon oxides. This unit comprises a vacuum chamber 5, a raw material chamber 6 disposed in the vacuum chamber 5, and a precipitation chamber 7 disposed above the raw material chamber 6.

The raw material chamber 6 is a cylindrical body, and comprises a cylindrical raw material container 8 at a central part thereof and a heating source 10 surrounding the raw material container 8. The heating source 10 is, for example, an electric heater.

The precipitation chamber 7 is a cylindrical body disposed such that the axis thereof is aligned with that of the raw material container 8. On the inner circumferential surface of the precipitation chamber 7, a precipitation substrate 11 of stainless steel is disposed to deposit gaseous silicon oxide generated by sublimation in the raw material chamber 6.

The vacuum chamber 5 accommodating the raw material chamber 6 and the precipitation chamber 7 is connected to a vacuum device (not shown) for discharging ambient gas, so that the gas is discharged in the direction of arrow A.

When producing silicon oxide using the production unit as shown in Fig. 2, mixed granulated raw material 9 is used, which is made from silicon powder and silicon dioxide powder as raw materials by blending, mixing, granulating and drying. The raw material container 8 is filled with the mixed granulated raw material 9 and heated by the heating source 10 in the atmosphere of inert gas or in vacuum to form (sublimate) SiO. The gaseous SiO generated by sublimation ascends from the raw material chamber 6 and enters the precipitation chamber 7, in which it is deposited on the peripheral precipitation substrate 11 and precipitated as a lower silicon oxide 12. Then, the precipitated silicon oxide 12 is removed from the precipitation substrate 11 and pulverized by using a ball mill or the like, to obtain a silicon oxide powder.

The average particle diameter of the silicon oxide powders is preferably 0.1μm or more, more preferably 0.5μm or more, and further preferably 1.0μm or more. It is also preferably 30μm or less, more preferably 20μm or less, and

further preferably 10µm or less. When the average particle diameter is too small, the bulk density becomes too low, resulting in low charge and discharge capacities per unit volume. On the other hand, if the average particle diameter is too large, production of an electrode membrane (corresponding to working electrode 2c shown in Fig. 1) becomes difficult with possible detachment of powder from the current collector. The average particle diameter is determined as the weight-average value $D_{50}$ (a particle size or median diameter when the accumulated weight is 50% of the total weight) in granularity distribution measurement by laser diffractometry.

5-2. Formation of Silicon Coating

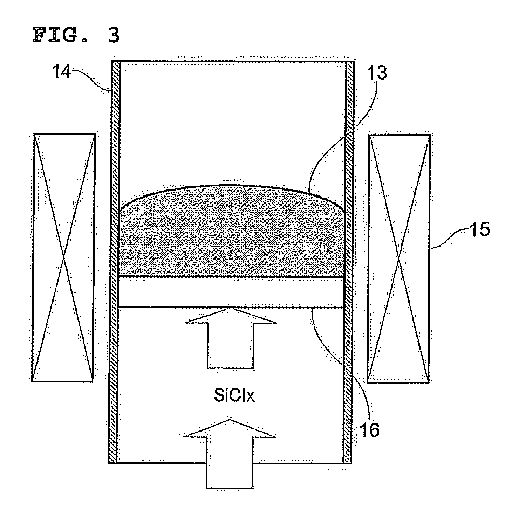

Fig. 3 shows a configuration example of a device of disproportionation reaction of $SiCl_x$. The device of disproportionation reaction of $SiCl_x$ comprises a powder container 14 accommodating a silicon oxide powder 13 and a heating source 15 surrounding the powder container 14. As the heating source 15, for example, an electric heater can be used. The inside of the powder container 14 is vertically partitioned by a porous plate 16 and the silicon oxide powder 13 is loaded on the porous plate 16. Then, $SiCl_x$ gas is introduced into the powder container 14 from below the porous plate 16. The $SiCl_x$ gas through the porous plate 16 comes in contact with the surface of the silicon oxide powder 13 heated by the heating source 15 and is discharged upward.

Since the silicon oxide powder 13 and the atmosphere surrounding it are heated by the heating source 15, when $SiCl_x$ is introduced into the powder container 14, disproportionation reaction of $SiCl_x$ (X<4), expressed by the following chemical formula (1), occurs on the surface of silicon oxide powder 13 to thereby produce silicon.

$$mSiCl_x \rightarrow (m-n) \, Si + nSiCl_4 \qquad (1)$$

Silicon (Si) produced by disproportionation reaction of $SiCl_x$ attaches to the surface of the silicon oxide powder 13, forming silicon coating, i.e., silicon-rich layer, resulting in the negative-electrode material powder for lithium-ion secondary battery. The thickness and the amount of silicon coating can be adjusted by adjusting an introduction amount of $SiCl_x$ and time of introduction thereof.

The heating temperature of silicon oxide powder 13 by the heating source 15 may be a temperature (500°C or more) where disproportionation reaction of $SiCl_x$ occurs. It is also preferably in a temperature range (900°C or less) where the amorphous structure of silicon oxide can be maintained.

6. Formation of Conductive Carbon Film

A conductive carbon film is formed on the surface of the silicon-rich layer of the negative-electrode material powder for lithium-ion secondary battery, using CVD or the like. Concretely, a rotary kiln is used as the device, and a mixed gas of hydrocarbon gas or an organic matter-containing gas and inert gas as the source gas.

The temperature to form the conductive carbon film is 850°C. Treatment time is set depending on the thickness of the conductive carbon film to be formed. Forming the conductive carbon film can enhance electric conductivity of the negative-electrode material powder for lithium-ion secondary battery. Thus, the use of the negative-electrode material powder formed with the conductive carbon film can provide a large reversible capacity, while having a small irreversible capacity, in a lithium-ion secondary battery compared with the case without forming the conductive carbon film.

7. Configuration of Lithium-Ion Secondary Battery

A configuration example of a coin-shaped lithium-ion secondary battery using the negative-electrode material powder for lithium-ion secondary battery of the present invention is explained with reference to Fig. 1. The basic configuration of the lithium-ion secondary battery shown in the figure is as mentioned above.

The negative-electrode material used for the working electrode 2c constituting the negative electrode 2 can be formed of the negative-electrode material powder (active material) of the present invention, other active materials, a conductive auxiliary agent, and a binder. The amount of content of the negative-electrode material powder of the present invention within the negative-electrode material (the ratio of the mass of the negative-electrode material powder of the present invention to the total mass of the material constituting a negative-electrode material except the binder) is 20 % by mass or more. Other active materials for a negative-electrode material powder do not necessarily have to be added. The conductive auxiliary agent may be acetylene black or carbon black and the binder may be polyvinylidene fluoride, for example.

EXAMPLES

To confirm the effects of the present invention, the following tests were conducted and the results were evaluated.

1. Test Conditions

Silicon oxides were precipitated on a precipitation substrate, using the unit shown in Fig. 2, from the mixed granulated raw material, which was made from silicon powder and silicon dioxide powder by blending, mixing, granulating and drying, as the raw material. The precipitated silicon oxides were pulverized for 24 hours with an alumina ball mill to form silicon oxide powder of the average particle diameter of 1.0 to 5$\mu$m, which was then subjected to disproportionation reaction of $SiCl_x$ using the unit shown in Fig. 3 to form silicon coating.

Table 2 shows conditions: the temperature of silicon oxide powder for generating the disproportionation reaction, the value c of the molar ratio of oxygen to silicon (O/Si) on the surface of silicon oxide powder, the value d of the molar ratio of oxygen to silicon for the entire part of powder, and whether or not silicon is crystalline (crystalline Si) on the surface of and inside the powder.

[Table 2]

TABLE 2

| Test No. | Classification | Disproportionation Temp. (°C) | Disproportionation Time (Hr) | Molar Ratio O/Si | | | Crystalline Si | | Carbon Coating | Battery performance evaluation | | |
|---|---|---|---|---|---|---|---|---|---|---|---|---|
| | | | | Surface (c) | Entire part (d) | c/d | Inside | Surface | | Reversible Capacity | Irreversible Capacity | Reversible Capacity/ Irreversible Capacity |
| 1 | Inventive Ex. | 500 | 4 | 0.05 | 0.82 | 0.06 | No | No | No | 1.35 | 0.76 | 1.80 |
| 2 | Inventive Ex. | 500 | 4 | 0.05 | 0.82 | 0.06 | No | No | Yes | 1.42 | 0.70 | 2.03 |
| 3 | Inventive Ex. | 500 | 2 | 0.20 | 0.87 | 0.23 | No | No | No | 1.29 | 0.83 | 1.55 |
| 4 | Inventive Ex. | 500 | 2 | 0.20 | 0.87 | 0.23 | No | No | Yes | 1.33 | 0.79 | 1.68 |
| 5 | Inventive Ex. | 500 | 1 | 0.80 | 0.91 | 0.88 | No | No | No | 1.18 | 0.87 | 1.35 |
| 6 | Inventive Ex. | 500 | 1 | 0.80 | 0.91 | 0.88 | No | No | Yes | 1.21 | 0.84 | 1.44 |
| 7 | Inventive Ex. | 900 | 4 | 0.05 | 0.82 | 0.06 | No | Yes | No | 1.28 | 0.82 | 1.60 |
| 8 | Inventive Ex. | 900 | 4 | 0.05 | 0.82 | 0.06 | No | Yes | Yes | 1.33 | 0.77 | 1.73 |
| 9 | Inventive Ex. | 1100 | 4 | 0.05 | 0.82 | 0.07 | Yes | Yes | No | 1.31 | 0.87 | 1.50 |
| 10 | Inventive Ex. | 1100 | 4 | 0.05 | 0.82 | 0.07 | Yes | Yes | Yes | 1.36 | 0.82 | 1.66 |
| 11 | Comp. Ex. | - | - | 1.10 | 1.02 | 1.08 | No | No | No | 1.00 | 1.00 | 1.00 |
| 12 | Comp. Ex. | Comp. | Comp. | 0.86 | 0.83 | 1.04 | No | No | No | 1.18 | 0.95 | 1.20 |

Test Nos. 1 to 10 in Table 2 are inventive examples, in which silicon coating was formed on the surface of silicon oxide powder with c and d satisfying the condition of the present invention. For the silicon oxide powder, $SiO_x$ (x=1.02) powder without crystalline Si was used as a lower silicon oxide powder. Of the examples, Test Nos.2, 4, 6, 8 and 10 were made from Test Nos.1, 3, 5, 7 and 9 of the silicon oxide powder by forming the conductive carbon film on the surface of the silicon coating.

The conductive carbon film was formed by treatment with a rotary kiln under an atmosphere of hydrocarbon gas at 850°C for 15 minutes. The silicon oxide powders of Test Nos. 2, 4, 6, 8 and 10 showed specific resistance values of 2.5±0.5 (Ωcm) by forming the conductive carbon film.

Specific resistance ρ (Ωcm) of the silicon oxide powder was calculated using equation (2):

$$\rho = R \times A/L \cdots (2)$$

given by R: electric resistance (Ω) of sample, A: bottom area (cm²) of sample, L: thickness (cm) of sample.

The electric resistance of a sample was measured with the two-terminal method using a digital multimeter (VOAC7513 made by IWATSU TEST INSTRUMENTS CORP.) after filling a sample of 0.20g into a powder resistance measuring tool (tool part: made of stainless of a 20mm inner diameter, frame part: made of polytetrafluoroethylene) and pressing it at 20kgf/cm² for 60 seconds. The thickness of a sample was measured with a micrometer.

Test Nos. 11 and 12 are for comparative examples, and in each case, silicon coating was not formed on the surface of silicon oxide powder with c and d not satisfying the condition of the present invention. For the silicon oxide powder of Test No. 11, $SiO_x$ (x=1.02) powder without crystalline Si was used as a lower silicon oxide powder as in the case of Test Nos. 1 to 10. The value d was almost the same as the value x, while the value of c was larger than the value x due to oxidation by oxygen in the air. For Test No. 12, the silicon oxide powder having a smaller d than 1 (one) and a larger ratio of silicon to oxygen was used. The value d can be adjusted, with a method in which a silicon oxide powder is obtained by heating silicon and silicon dioxide independently by resistance heating in vacuum and deposit them at a single place followed by pulverization of the deposit product, by adjusting the ratio of silicon to silicon dioxide to be deposited by changing the temperatures of silicon and silicon dioxide by resistance heating.

These silicon oxide powders are used as negative electrode active materials and blended with carbon black, which is a conductive auxiliary agent, and a binder to produce negative-electrode materials. The proportion of the blending for the negative-electrode materials is silicon oxide : carbon black : binder = 7 : 2 : 1. Lithium-ion secondary batteries having a coin shape shown in Fig. 1 were produced using the negative-electrode materials and Li metal as a positive electrode material and examined the reversible capacity and irreversible capacity.

2. Test Results

With respect to the lithium-ion secondary batteries using the silicon oxide powders produced in the above conditions, evaluation was conducted for the reversible capacity, the irreversible capacity and the value of the reversible capacity divided by the irreversible capacity ("reversible capacity / irreversible capacity") at the initial charging and discharging as evaluation index. These results are shown in Table 2 with the test conditions. In Table 2, the reversible capacity and the irreversible capacity are expressed as relative values with the results of Test No. 6 being regarded as 1 (one) and the values of the "reversible capacity / irreversible capacity" were calculated from these relative values.

Test Nos. 11 and 12 which are comparative examples, did not exhibit crystalline silicon either on the surface of or inside the silicon oxide powders. Test Nos. 11 and 12 which are comparative examples, where no silicon coating was formed on the surfaces of the silicon oxide powders, exhibited larger values of c than d and c/d of 1.08 and 1.04, due to oxidation on the surface by oxygen in air.

Test No. 12 showed higher values than Test No. 11 both on the reversible capacity and the "reversible capacity / irreversible capacity" on the lithium-ion secondary batteries. This seems to be attributed to a smaller molar ratio value d of oxygen to silicon for the entire part of the powder with Test No. 12 than with Test No. 11, that is, a larger silicon ratio with Test No. 12 than with Test No. 11.

However, the reversible capacity and the "reversible capacity /irreversible capacity" of Test Nos. 11 and 12 lithium-ion secondary batteries were lower than those of Test Nos. 1, 3 and 5 of the inventive examples in which crystalline silicon was not observed either on the surface of or inside the silicon oxide powder.

Test Nos. 1, 3 and 5 are inventive examples, in which silicon is not crystalline even with different c/d. These results indicate that, the smaller the c/d value, the larger the value of "reversible capacity / irreversible capacity", that is, the larger the reversible capacity with respect to the irreversible capacity.

Test Nos. 1, 7 and 9 are inventive examples, in which silicon crystalline states are different even with the same c/d. Test No. 1 did not show crystalline silicon both on the surface of and inside the silicon oxide powder, Test No. 7 showed crystalline silicon only on the surface of silicon oxide powder, and Test No. 9 showed crystalline silicon both on the surface of and inside the silicon oxide powder. The difference between whether or not silicon is crystalline lies in the temperature difference of the disproportionation.

Results of Test Nos. 1, 7 and 9 indicate that, the lower the degree of crystallization of silicon oxide powder, the larger the value of "reversible capacity/irreversible capacity".

In comparison of the results of Test Nos. 2, 4, 6, 8 and 10 to those of Test Nos. 1, 3, 5, 7 and 9, respectively, the reversible capacity increased and the irreversible capacity decreased, resulting in the increase of the value of "reversible capacity/irreversible capacity", in all cases. This seems to be attributed to generation of the conductive carbon film.

INDUSTRIAL APPLICABILITY

A lithium-ion secondary battery having a large reversible capacity, while having a small irreversible capacity, can be obtained by using the negative-electrode material powder for lithium-ion secondary battery of the present invention as a negative electrode active material. According to the method for producing a negative-electrode material powder for lithium-ion secondary battery of the present invention, such a negative-electrode material powder can be produced. Accordingly, the present invention is technologically useful in the field of secondary batteries.

REFERENCE SIGNS LIST

1: Positive electrode, 1a: Counter electrode case
1b: Counter electrode current collector, 1c: Counter electrode
2: Negative electrode, 2a: Working electrode case
2b: Working electrode current collector, 2c: Working electrode
3: Separator, 4: Gasket, 5: Vacuum chamber
6: Raw material chamber, 7: Precipitation chamber
8: Raw material container, 9: Mixed granulated raw material
10: Heating source, 11: Precipitation substrate
12: Silicon oxide, 13: Silicon oxide powder
14: Powder container, 15: Heating source
16: Porous plate

**Claims**

1. A negative-electrode material powder for lithium-ion secondary battery in which a lower silicon oxide powder is used, **characterized in that** a silicon-rich layer is included on the surface of the lower silicon oxide powder.

2. The negative-electrode material powder for lithium-ion secondary battery according to claim 1, **characterized in that** a conductive carbon film is included on the surface of the silicon-rich layer.

3. A negative-electrode material powder for lithium-ion secondary battery in which a silicon oxide powder is used, **characterized in that** the silicon oxide powder satisfies the relationship of c/d<1, given that c is the value of the molar ratio of oxygen to silicon on the surface of the silicon oxide powder and d is the value of the molar ratio of oxygen to silicon for the entire part thereof.

4. The negative-electrode material powder for lithium-ion secondary battery according to claim 3, **characterized in that** the relationship of c<1 is satisfied.

5. The negative-electrode material powder for lithium-ion secondary battery according to claim 3 or 4, **characterized in that** the relationship of 0.8<d<1.0 is satisfied.

6. The negative-electrode material powder for lithium-ion secondary battery according to claim 3 or 4, **characterized in that** the relationship of 0.8<d<0.9 is satisfied.

7. The negative-electrode material powder for lithium-ion secondary battery of according to any one of claims 3 to 6, **characterized in that** the surface of the powder is devoid of crystalline silicon.

8.  The negative-electrode material powder for lithium-ion secondary battery according to any one of claims 3 to 7, **characterized in that** the inside of the powder is amorphous.

9.  The negative-electrode material powder for lithium-ion secondary battery of according to any one of claims 3 to 8, **characterized in that** a conductive carbon film is included on the surface thereof.

10. A method for producing a negative-electrode material powder for lithium-ion secondary battery in which a silicon-rich layer is included on the surface of a lower silicon oxide powder, **characterized in that** the silicon-rich layer on the surface of the lower silicon oxide powder is formed using disproportionation reaction of $SiCl_x$ (X<4).

11. The method for producing a negative-electrode material powder for lithium-ion secondary battery according to claim 10, **characterized in that** the disproportionation reaction of $SiCl_x$ (X<4) is performed in an atmosphere at 500 to 1100°C.

12. The method for producing a negative-electrode material powder for lithium-ion secondary battery according to claim 10, **characterized in that** the disproportionation of $SiCl_x$ (X<4) is performed in an atmosphere at 500 to 900°C.

**FIG. 1**

**FIG. 2**

FIG. 3

SiClx

## INTERNATIONAL SEARCH REPORT

| | International application No. |
|---|---|
| | PCT/JP2011/002466 |

**A. CLASSIFICATION OF SUBJECT MATTER**
*H01M4/48*(2010.01)i, *C01B33/02*(2006.01)i, *C01B33/113*(2006.01)i, *H01M4/36*
(2006.01)i

According to International Patent Classification (IPC) or to both national classification and IPC

**B. FIELDS SEARCHED**

Minimum documentation searched (classification system followed by classification symbols)
H01M4/48, C01B33/02, C01B33/113, H01M4/36

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X<br>P,A | JP 2010-272411 A (Shin-Etsu Chemical Co.,<br>Ltd.),<br>02 December 2010 (02.12.2010),<br>claims 1, 3, 5; paragraphs [0014], [0025]<br>(Family: none) | 1-4,7-9<br>5,6,10-12 |
| A | JP 2009-259723 A (Shin-Etsu Chemical Co.,<br>Ltd.),<br>05 November 2009 (05.11.2009),<br>entire text<br>& US 2009/0239151 A1 & EP 2104175 A2<br>& KR 10-2009-0099487 A | 1-12 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 August, 2011 (15.08.11) | 30 August, 2011 (30.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/002466

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-104892 A  (Panasonic Corp.), <br> 14 May 2009 (14.05.2009), <br> entire text <br> & US 2009/0104515 A1     & CN 101373846 A <br> & KR 10-2009-0041329 A | 1-12 |
| A | JP 2005-85717 A  (Japan Storage Battery Co., Ltd.), <br> 31 March 2005 (31.03.2005), <br> entire text <br> (Family: none) | 1-12 |

Form PCT/ISA/210 (continuation of second sheet) (July 2009)

**EP 2 579 367 A1**

**REFERENCES CITED IN THE DESCRIPTION**

**Patent documents cited in the description**

• JP 2997741 B